# EUROPÄISCHE PATENTSCHRIFT

(11) **EP 0 548 651 B1**
(45) Veröffentlichungstag und Bekanntmachung des Hinweises auf die Patenterteilung: **23.04.1997**
(21) Anmeldenummer: 92120824.5
(22) Anmeldetag: 07.12.1992
(51) Int. Cl.: B25F 5/02, H01M 2/10

(54) **Batteriegespeistes Elektrohandwerkzeug**
Battery-powered electric hand tool
Outil électrique à main alimenté par batterie

(30) Priorität: 21.12.1991 DE 4142699
(43) Veröffentlichungstag der Anmeldung: 30.06.1993
(73) Patentinhaber: SCINTILLA AG, CH-4500 Solothurn (CH)
(72) Erfinder: Allemann, Markus, CH-4528 Zuchwil (CH)
(74) Vertreter: Voss, Klaus, Dipl.-Ing.

(56) Entgegenhaltungen:
- DE-A- 3 502 449
- DE-A- 3 902 442
- DE-C- 387 688
- DE-U- 8 628 481
- FR-A- 2 461 431
- US-A- 3 186 878

## Beschreibung

### Stand der Technik

Die Erfindung geht aus von einem batteriegespeisten Elektrohandwerkzeug, wie Akkuschrauber, Akkubohrer od.dgl., der im Oberbegriff des Anspruchs 1 definierten Gattung.

Ein derartiges Elektrohandwerkzeug ist aus der DE-A-3902442 bekannt.

Bei einem anderen bekannten Akkuschrauber ist das Batteriegehäuse, auch Akku-Pack genannt, auf der vom Spannfutter abgekehrten Seite des dort zu einem Handgriff geformten Maschinengehäuses aufgesetzt und bildet zusammen mit dem Maschinengehäuse eine geschlossene Handgriffkontur. Am Batteriegehäuse sind an zwei gegenüberliegenden Längsseiten schwenkbare Griffplatten eingelegt, die mit je einem Rasthaken verbunden sind. Die Rasthaken stehen in Ansetzrichtung des Batteriegehäuses an das Maschinengehäuse über das Batteriegehäuse vor und tragen dort Klinken, die unter Federkraft in Aussparungen im Maschinengehäuse einfallen. Zum Abnehmen des Batteriegehäuses vom Maschinengehäuse sind die beidseitigen Griffplatten in das Batteriegehäuse hineinzudrücken, wodurch die Rasthaken gegen Federkraft so geschwenkt werden, daß die Klinken aus den Aussparungen ausschwenken.

Aus der DE-A-35 02 449 ist ein Bohrhammer mit batteriebetriebenem Antriebsmotor bekannt, der mit einem an ein Maschinengehäuse ansetzbarem Batteriegehäuse versehen ist. Zum Verriegeln des Batteriegehäuses am Maschinengehäuse dienen federbelastete Rasthaken, die einen an einer Konsole ausgebildeten Vorsprung hintergreifen. Eine derartige Verriegelung ist zwar sicher, sie erfordert aber einen relativ hohen Fertigungsaufwand.

Aus der DE-A-39 02 442 ist eine Verriegelungseinrichtung für die Verriegelung einer Batterieeinheit mit einem elektrischen Gerät bekannt, die als Rastelement eine etwa U-förmige, federelastische Spange aufweist. Die Schenkel der Spange sind nach innen vorgespannt und zum Hintergreifen von einander abgewandten, nach außen gerichteten Vorsprüngen ausgebildet. Zur Entriegelung der Batterieeinheit ist ein als separates Teil ausgebildetes Freigabeelement erforderlich, das nach Eindrücken eines Druckknopfes mit zwei gabelartigen Schenkeln die freien Endbereiche der Spange spreizt. Für die Herstellung, Bereithaltung und Montage des Freigabeelementes ist ein zusätzlicher Aufwand erforderlich. Auch bietet die gleichzeitige Entriegelung beider Schenkel der Spange durch das Freigabeelement keine ausreichende Sicherheit gegen eine versehentliche Entriegelung der Batterieeinheit.

### Vorteile der Erfindung

Das erfindungsgemäße batteriegespeiste Elektrohandwerkzeug mit den kennzeichnenden Merkmalen des Anspruchs 1 hat demgegenüber den Vorteil einer konstruktiv einfachen Ausbildung der Rastverbindung zwischen Batterie- und Maschinengehäuse, die eine einfache Herstellung von Maschinen- und Batteriegehäuse und damit eine Senkung der Fertigungskosten ermöglicht. Da zum Entriegeln der Batterieeinheit jeder der beiden Schenkel der Spange jeweils für sich gleichzeitig nach innen versetzt werden muß, wird ein versehentliches Lösen der Batterieeinheit erschwert.

Die als separates Bauteil hergestellte federelastische Spange ist preiswert und macht zusätzliche Federn an den Rasthaken zur automatischen Verriegelung der Rastverbindung entbehrlich. Die erfindungsgemäße Verlagerung der Federkraft für die Verriegelung der Rastverbindung weg von den Rasthaken in die Rastelemente (Spange) im Maschinengehäuse ermöglicht es, die Rasthaken an das aus Kunststoff hergestellte Batteriegehäuse gleich mit anzuspritzen, was die Fertigungskosten wesentlich reduziert. Da üblicherweise das Maschinengehäuse zweischalig ausgebildet wird, kann die Spange zugleich zum Zusammenhalten der beiden Gehäuseschalen verwendet werden. Damit wird die ansonsten erforderliche Verschraubung der beiden Gehäuseschalen eingespart.

Als federelastische Spange wird bevorzugt ein Drahtbügel verwendet. Die Spange kann jedoch auch aus anderen Materialien gefertigt werden, die gewährleisten, daß die Spange aufgrund ihrer U-förmigen Ausbildung eine gewisse Federelastizität besitzt, so daß die U-Schenkel der Spange bei Aufbringen entsprechender Querkräfte nach innen einfedern und sich nach Wegfall dieser Querkräfte wieder in ihre Ausgangslage zurückstellen.

Durch die in den weiteren Ansprüchen aufgeführten Maßnahmen sind vorteilhafte Weiterbildungen und Verbesserungen des im Anspruch 1 angegebenen Elektrohandwerkzeugs möglich.

In einer bevorzugten Ausführungsform der Erfindung sind zur Aufnahme der Spange in einem zweischaligen Maschinengehäuse dort zwei einander gegenüberliegende, jeweils von einer der Gehäuseschalen ins Gehäuseinnere vorspringende Rinnen sowie eine quer dazu sich über die beiden Gehäuseschalen erstreckenden äußere Nut vorgesehen. Die Spange wird nunmehr so in das Maschinengehäuse eingesteckt, daß die beiden U-Schenkel der Spange in den Rinnen verlaufen, deren Rinnenöffnungen einander zugekehrt sind, und der die beiden U-Schenkel verbindende Steg der Spange in der äußeren Nut formschlüssig einliegt. Die Rinnen sind im Bereich der in das Maschinengehäuse hineinragenden Rasthaken derart ausgespart, daß jeweils ein Schenkelabschnitt an jedem U-Schenkel freiliegt und die Rasthaken mit Rastnasen zwischen den freiliegenden Schenkelabschnitten und der Innenwand der Gehäuseschalen hindurchzutreten vermögen.

In einer vorteilhaften Ausführungsform der Erfindung sind auf jeder Gehäuseseite des Batteriegehäuses zwei mit Abstand voneinander angeordnete Rasthaken vorgesehen und zwischen jeweils zwei Rasthaken mit Rastnase und Aushebeschräge jeweils eine Entriegelungszunge angeordnet, die im wesentlichen bündig mit den zugeordneten Rasthaken ist und bis mindestens zu der Anhebeschräge reicht. Beim Ansetzen des Batteriegehäuses an das Maschinengehäuse schiebt sich damit das Stirnende der Rasthaken zwischen der Innenwand der Gehäuseschalen und der freiliegenden Schenkelabschnitte der Spange hindurch, wobei die Aushebeschrägen die U-Schenkel nach innen auslenken. Am Ende der Aushebeschrägen federn dann die U-Schenkel hinter die Flanken der Rastnasen zurück, die damit gegen Bewegung in Abziehrichtung des Batteriegehäuses vom Maschinengehäuse verriegelt sind. Zum Lösen der Rastverbindung müssen die beiden Entriegelungszungen eingedrückt werden, die dadurch die U-Schenkel der Spange nach innen auslenken, so daß sie unter den Rastnasen hervortreten. Die Rastnasen sind damit von den U-Schenkeln der Spange freigegeben, und das Batteriegehäuse kann vom Maschinengehäuse abgezogen werden.

Zur Begrenzung des Einfederwegs der Entriegelungszungen und damit des Einfederwegs der U-Schenkel der Spange sind in einer vorteilhaften Ausführungsform der Erfindung Wandschrägen vorgesehen, von denen sich jeweils eine zwischen zwei Rasthaken an einer Seite des Batteriegehäuses erstreckt. Die zu den Rasthaken zurückversetzten Wandschrägen sind bevorzugt einstückig mit den zugeordneten Rasthaken ausgebildet.

In einer zweckmäßigen Ausführungsform der Erfindung ist das Batteriegehäuse zweigeteilt und weist ein unteres, kastenförmiges Gehäuseteil und ein oberes, plattenartiges Gehäuseteil auf. Das obere Gehäuseteil ist auf das untere Gehäuseteil aufgesetzt und mit diesem fest verbunden, was beispielsweise durch Verschweißen, Verkleben, Vergießen od. dgl. erfolgen kann.

Die Rasthaken und die Wandschrägen sind dabei bevorzugt am oberen Gehäusesteil so angeformt, daß die Rasthaken an den von den Rastnasen abgekehrten Enden nach unten zum unteren Gehäuseteil hin vorstehen und die Wandschrägen sich dort zwischen den beiden Rasthaken bis hin zu deren freien Ende erstrecken. Die Entriegelungszungen sind von Seitenwandabschnitten des unteren Gehäuseteils dadurch gebildet, daß jeweils beidseitig der Entriegelungszungen Wandausschnitte zur Aufnahme der Rasthaken in die Seitenwände eingebracht sind. Durch diese Maßnahmen entsteht ein Batteriegehäuse mit ebenflächigen Außenkonturen ohne überstehende oder tieferliegende Teile.

### Zeichnung

Die Erfindung ist anhand eines in der Zeichnung dargestellten Ausführungsbeispiels in der nachfolgenden Beschreibung näher erläutert. Es zeigen jeweils in perspektivischer Darstellung:
- Fig. 1: eine Explosionsdarstellung eines Batteriegehäuses für ein batteriegespeistes Elektrohandwerkzeug,
- Fig. 2: das obere Gehäuseteil des Batteriegehäuses in Fig. 1 mit kompletter Rastverbindung,
- Fig. 3: ausschnittweise ein Maschinengehäuse zum Ansetzen des Batteriegehäuses in Fig. 1 mit einem Teil der Rastverbindung,
- Fig. 4: ausschnittweise das obere Gehäuseteil des Batteriegehäuses in Fig. 1 mit kompletter Rastverbindung im Zustand der Entriegelung.

### Beschreibung des Ausführungsbeispiels

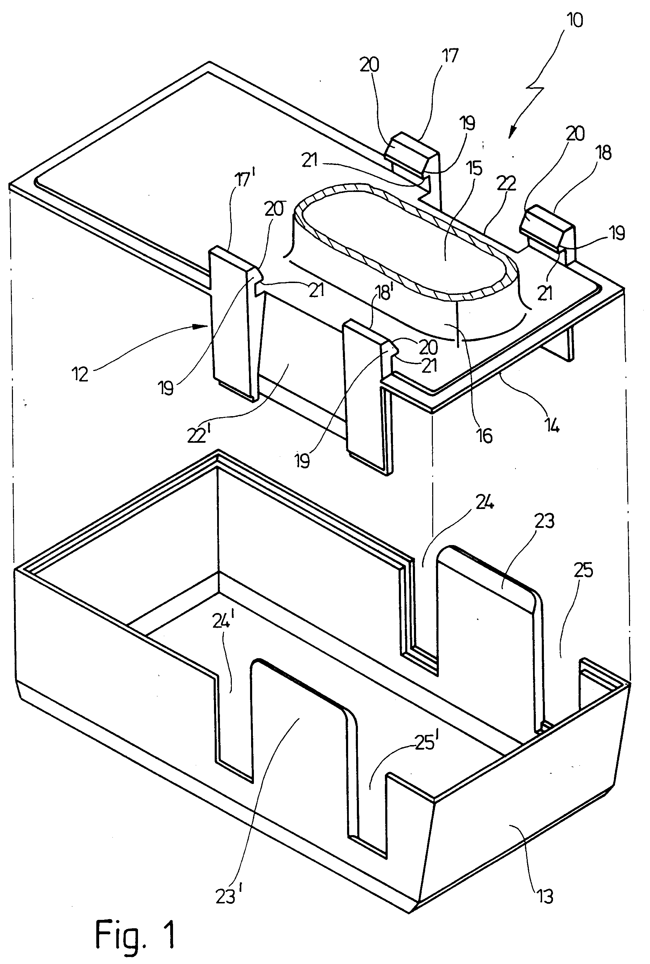

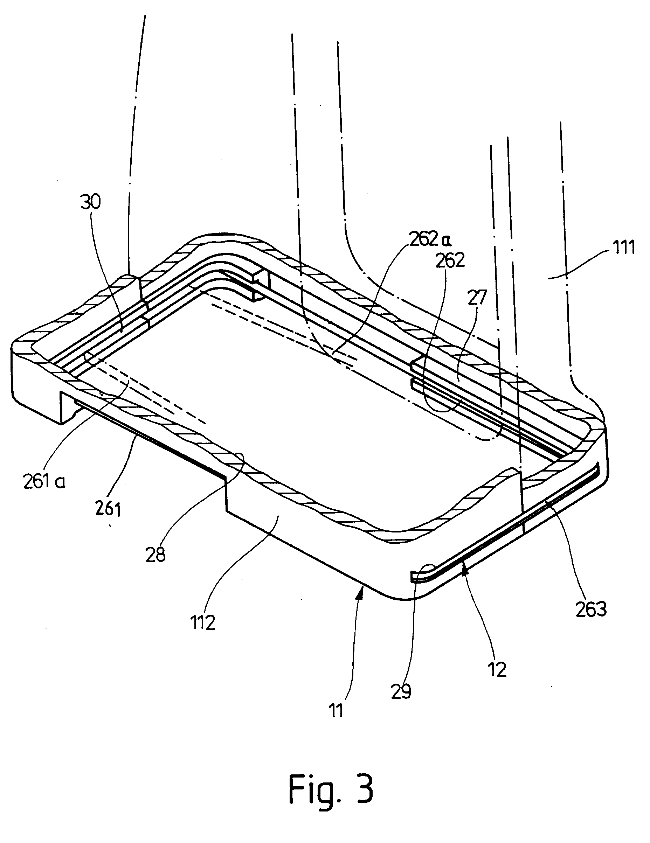

Das in Fig. 1 in Explosionsdarstellung zu sehende Batteriegehäuse 10, auch Akku-Pack genannt, ist Teil eines batteriegespeisten Elektrohandwerkzeugs, wie Akkuschrauber, Akkubohrer od.dgl., dessen Maschinengehäuse 11 in Fig. 3 ausschnittweise dargestellt ist. Das Batteriegehäuse 10 wird dabei an die Rückseite des aus zwei Gehäuseschalen 111,112 bestehenden Maschinengehäuses 11 angesetzt, wobei das in Fig. 1 dargestellte Batteriegehäuse 10 zuvor um 180° um seine Achse gedreht werden muß. Beim Ansetzen des Batteriegehäuses 10 an das Maschinengehäuse 11 wird automatisch eine noch im einzelnen nachstehend beschriebene Rastverbindung 12 wirksam, so daß das Batteriegehäuse 10 zuverlässig an dem Maschinengehäuse 11 gehalten wird.

Wie Fig. 1 zeigt, ist das Batteriegehäuse 10 zweigeteilt und besteht aus einem unteren kastenförmigen Gehäuseteil 13 und einem oberen, plattenartigen Gehäuseteil 14. Das obere Gehäuseteil 14 ist auf das untere Gehäuseteil 13 aufgesetzt. Im oberen Gehäuseteil 14 ist eine ellipsenförmige Öffnung 15 vorgesehen, die von einem Hohlstutzen 16 umschlossen ist, der in den einzelnen Figuren der Zeichnung nur abschnittweise dargestellt ist. In dem Hohlstutzen 16 werden die einzelnen zylindrischen Akkuzellen hochkant eingesetzt, die sich dabei an hier nicht dargestelllten Kontaktelementen am Boden des unteren Gehäuseteils 13 abstützen. Der Hohlstutzen 16 ist am oberen Ende mit einem z.B. damit einstückigen, nicht sichtbaren Deckel verschlossen, der Öffnungen zum Hindurchführen elektrischer Kontakte enthält. Nach Einlegen der Akkuzellen werden die beiden Gehäuseteile 13 und 14 geschlossen und fest miteinander verbunden, z.B. verschweißt, verklebt, vergossen od. dgl.

Die Rastverbindung 12 zwischen dem Batteriegehäuse 10 und dem Maschinengehäuse 11 umfaßt am Batteriegehäuse 10 angeordnete Rasthaken und ein im Maschinengehäuse einliegendes Rastelement. Dabei sind am oberen Gehäuseteil 14 des Batteriegehäuses 10 auf jeder Längsseite zwei mit Abstand voneinander angeordnete Rasthaken 17,18 bzw. 17',18' vorgesehen, die in Ansetzrichtung des Batteriegehäuses 10 an das Maschinengehäuse 11 über das obere, plattenförmige Gehäuseteil 14 vorstehen. Jeder Rasthaken 17,18,17',18' trägt im Überstehbereich eine nach innen vorspringende Rastnase 19, die über eine Aushebeschräge 20 zum Ende des Rasthakens hin abfällt und auf ihrer dem oberen Gehäuseteil 14 zugekehrten Seite eine Steilflanke 21 besitzt. Die Rasthaken 17,18 bzw. 17',18' stehen auch nach unten zum unteren Gehäuseteil 13 hin vor und sind in diesem Bereich durch eine nach innen zurückversetzte Wandschräge 22 bzw. 22' miteinander verbunden. Die Wandschräge 22 bzw. 22' erstreckt sich vom unteren Ende der Rasthaken 17,18 bzw. 17',18' bis zu der Oberkante des oberen Gehäuseteils 14, wobei das obere Ende der Wandschräge 22 bzw. 22' gegenüber dem unteren Ende weiter in das Gehäuseteil 14 hinein zurücktritt.

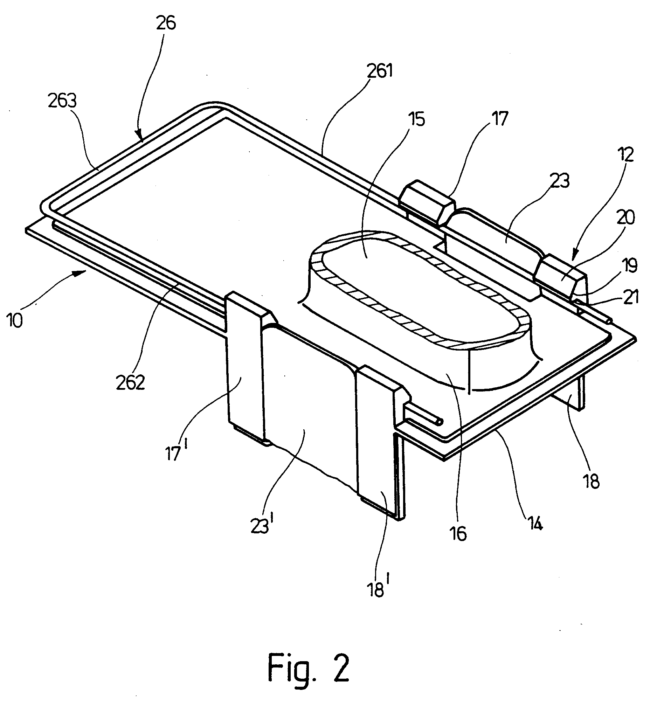

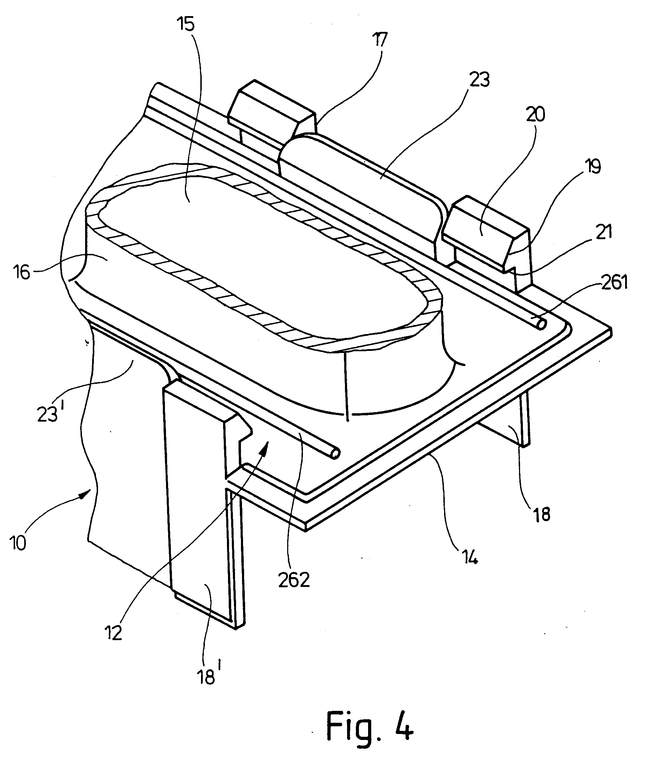

Am unteren, kastenförmigen Gehäuseteil 13 sind einander gegenüberliegende Entriegelungszungen 23,23' vorgesehen, die von Seitenwandabschnitten des unteren Gehäuseteils 13 dadurch gebildet sind, daß jeweils beidseitig der Entriegelungszungen 23,23' Wandausschnitte 24,25 bzw. 24',25' zur Aufnahme der Rasthaken 17,18 bzw. 17',18' eingebracht sind. Die Breitenabmessung der Entriegelungszunge 23 bzw. 23' entspricht dabei der Breitenabmessung der Wandschräge 22 bzw. 22' im oberen Gehäuseteil 14 und die Breite der Wandausschnitte 24,25 bzw. 24',25' der Breitenabmessung der Rasthaken 17,18 bzw. 17',18' im oberen Gehäuseteil 14. Beim Aufsetzen des oberen Gehäuseteils 14 auf das untere Gehäuseteil 13 liegen die Rasthaken 17,18 bzw. 17',18' mit ihrem nach unten sich erstreckenden Bereich formschlüssig und bündig in den Wandausschnitten 24,25 bzw. 24',25' ein, und die beiden Entriegelungszungen 23,23' überdecken die Wandschrägen 22,22'. Wie aus Fig. 2 und 4 zu erkennen ist, ragen dabei die Entriegelungszungen 23,23' bis an die oberen Enden der Rasthaken 17,18 bzw. 17',18', müssen aber mindestens bis über die Steilflanken 21 der Rastnasen 19 vorstehen. Die Wandschrägen 22,22' dienen zur Begrenzung des Einfederweges der Entriegelungszungen 23,23', die durch Greifen mit zwei Finger nach innen, bis auf die Wandschrägen 22,22' eingedrückt werden können. Die Rasthaken 17,18 bzw. 17',18' und die mit ihnen einstückigen Wandschrägen 22 bzw. 22' sind ebenso wie der Hohlstutzen 16 einstückig mit dem oberen Gehäuseteil 14 und werden beim Herstellungsprozeß gleich mit angespritzt.

Das Rastelement der Rastverbindung 12 zum Einrasten der Rasthaken 17,18 und 17',18' besteht aus einer federelastischen U-förmigen Spange 26, die hier als Drahtbügel 26 ausgebildet ist. Wie aus Fig. 3 ersichtlich ist, wird der Drahtbügel 26 in das Maschinengehäuse 11 von außen eingesteckt und dort axial unverschieblich gehalten. Hierzu sind zwei mit ihren Öffnungen einander gegenüberliegende Rinnen 27,28 vorhanden (die Rinne 28 ist durch die perspektivische Darstellung verdeckt), die jeweils von einer Längsseite der Gehäuseschalen 111 bzw. 112 des Gehäuses 11 ins Gehäuseinnere vorspringen. Die beiden Rinnen 27,28 sind durch eine auf der Schmalseite des Maschinengehäuses 11 verlaufende Querrinne 30 verbunden, die sich über beide Gehäuseschalen 111,112 erstreckt. Auf der gegenüberliegenden Schmalseite des Maschinengehäuses 11 verläuft auf dessen Außenfläche eine äußere Quernut 29, die sich über beide Gehäuseschalen 111,112 erstreckt und über Endbohrungen am Ende der Quernut 29, die mit dem lichten Querschnitt dem Rinnen 27,28 fluchten, mit letzteren in Verbindung steht. Der Drahtbügel 26 wird nunmehr mit seinen U-Schenkeln 261,262 durch die Endbohrungen in der Quernut 29 hindurchgesteckt und in die Rinnen 27,28 soweit eingeschoben, bis sein die beiden U-Schenkel 261,262 verbindender Steg 263 bündig und formschlüssig in der Quernut 29 einliegt. Dabei werden die freien Enden der beiden U-Schenkel 261,262 von der Querrinne 30 aufgenommen. Die beiden Rinnen 27,28 sind im Bereich der in das Maschinengehäuse 11 eindringenden Rasthaken 17,18 bzw. 17',18' derart ausgespart, daß von jedem U-Schenkel 261,262 ein Schenkelabschnitt 261a,262a freiliegt und in einem solchen Abstand von der Innenwand der Gehäuseschale 111 bzw. 112 verläuft, daß die Rasthaken 17,18 bzw. 17',18' zwischen den freiliegenden Schenkelabschnitten 261a,262a und der Innenwand der Gehäuseschalen 111,112 hindurchzutreten vermögen.

Beim Ansetzen des Batteriegehäuses 10 treten die Rasthaken 17,18 und 17',18' durch die vorstehend definierten Zwischenräume hindurch, wobei die Aushebeschrägen 20 an den Rasthaken 17,18 und 17',18' die beiden U-Schenkel 261,262 nach innen drücken, wobei die freien Enden der U-Schenkel 261,262 in der Querrinne 30 geführt werden (in Fig. 3 strichliniert angedeutet), bis die Rastnasen 19 an den U-Schenkeln 261,262 vorbeigeschoben sind. Dann federn die U-Schenkel 261,262 zurück und liegen an den Steilflanken 21 der Rastnasen 19 an. Dieser Verriegelungszustand der Rastverbindung 12 ist in Fig. 2 dargestellt, in der zur Verdeutlichung sowohl das den Drahtbügel 26 umschließende Maschinengehäuse 11 (vergl. Fig. 3) als auch der untere Gehäuseteil 13 des Batteriegehäuses 10 (vergl. Fig. 1)-mit Ausnahme der Entriegelungszungen 23,23'-weggelassen worden sind.

Soll das Batteriegehäuse 10 wieder von dem Maschinengehäuse 11 abgezogen werden, so sind die beiden Entriegelungszungen 23,23' mit zwei Finger zu greifen und nach innen gegen die Wandschrägen 22,22' zu pressen. Dabei federn die Entriegelungszungen 23,23' nach innen und drücken die U-Schenkel 261,262 des Drahtbügels 26 nach innen, so daß sie außer Eingriff mit den Rastnasen 19 der Rasthaken 17,18 und 17',18' kommen. Dieser Entriegelungszustand der Rastverbindung 12 ist in Fig. 4 dargestellt, wobei wiederum das Maschinengehäuse 11 und der untere Gehäuseteil 13 des Batteriegehäuses 10-mit Ausnahme der Entriegelungszungen 23,23'-weggelassen worden sind. Mit dem Ausschwenken der U-Schenkel 261,262 aus den Rastnasen 19 sind die Rasthaken 17,18 und 17',18' freigegeben, so daß das Batteriegehäuse 10 vom Maschinengehäuse 11 abgezogen werden kann.

## Patentansprüche

1. Batteriegespeistes Elektrohandwerkzeug, wie Akkuschrauber, Akkubohrer od.dgl., mit einem Maschinengehäuse (11), einem an das Maschinengehäuse (11), vorzugsweise an einem daran einstückig angeformten Handgriff, angesetzten Batteriegehäuse (10) zur Aufnahme von Batterien und mit einer zwischen Batteriegehäuse (10) und Maschinengehäuse (11) wirksamen Rastverbindung, die am Batteriegehäuse (10) an gegenüberliegenden Seitenwänden angeordnete Rasthaken (17,18,17',18') und am Maschinengehäuse (11) angeordnete Rastelemente zum Hintergreifen durch die Rasthaken aufweist, wobei die Rastelemente von einer im Maschinengehäuse (11) einliegenden U-förmigen, federelastischen Spange (26) gebildet sind, deren beiden U-Schenkel (261,262) von den Rasthaken (17,18,17',18') in der Verriegelungsposition der Rastverbindung (12) übergriffen werden, dadurch gekennzeichnet, daß die an gegenüberliegenden Seitenwänden angeordneten Rasthaken (17,18,17',18') jeweils einander zugewandte, nach innen vorspringende Rastnasen (19) aufweisen und daß die U-Schenkel (261,262) der Spange (26) durch Versetzen nach innen außer Eingriff mit den Rasthaken (17,18,17',18') bringbar sind.

2. Elektrohandwerkzeug nach Anspruch 1, bei dem das Maschinengehäuse (11) aus zwei in Gehäuselängsrichtung aneinandergesetzten Gehäuseschalen (111, 112) zusammengesetzt ist, dadurch gekennzeichnet, daß die U-förmige, federelastische Spange (26) derart im Maschinengehäuse (11) gehalten ist, daß mittels der Spange (26) beide Gehäuseschalen (111, 112) lösbar zusammengehalten sind.

3. Elektrohandwerkzeug nach Anspruch 2, dadurch gekennzeichnet, daß jeweils ein U-Schenkel (261, 262) der Spange (26) an einer zugeordneten Gehäuseschale (112 bzw. 111) angreift und diese gegen die andere Gehäuseschale (111 bzw. 112) drückt, während der beide U-Schenkel (261, 262) verbindende Steg (263) der Spange (26) sich über beide Gehäuseschalen (111 und 112) erstreckt.

4. Elektrohandwerkzeug nach einem der Ansprüche 1 bis 3, bei dem das Maschinengehäuse aus zwei in Gehäuselängsrichtung aneinandergesetzten Gehäuseschalen besteht, dadurch gekennzeichnet, daß die Spange (26) quer zur Längsachse des Maschinengehäuses (11) in dieses von außen so eingesteckt ist, daß die beiden U-Schenkel (261,262) der Spange (26) in zwei mit ihren Öffnungen einander gegenüberliegenden, jeweils von einer der Gehäuseschalen (111,112) vorspringenden Rinnen (27,28) verlaufen und der die beiden U-Schenkel (261,262) verbindende Steg (263) der Spange (26) in einer quer dazu sich über die beiden Gehäuseschalen (111,112) erstreckenden äußeren Nut (29) einliegt, und daß die beiden Rinnen (27,28) im Bereich der Rasthaken (17,18,17',18') derart ausgespart sind, daß ein Schenkelabschnitt (261a,262a) jedes U-Schenkels (261,262) freiliegt und die Rasthaken (17,18,17',18') zwischen den freiliegenden Schenkelabschnitten (261a,262a) und der Innenwand der Gehäuseschalen (111,112) hindurchzutreten vermögen.

5. Elektrohandwerkzeug nach einem der Ansprüche 1 bis 4, dadurch gekennzeichnet, daß auf jeder der beiden einander gegenüberliegenden Gehäuseseiten des Batteriegehäuses (10) zwei mit Abstand voneinander angeordnete Rasthaken (17,18 bzw. 17',18') vorgesehen sind, die in Ansetzrichtung des Batteriegehäuses (10) an das Maschinengehäuse (11) über das Batteriegehäuse (10) vorstehen und hier Rasthasen (19) mit Aushebeschrägen (20) zum Übergreifen der freiliegenden Schenkelabschnitte (261a,262a) der Spange (26) tragen, und daß zwischen jeweils zwei Rasthaken (17,18 bzw. 17',18) eine Entriegelungszunge (23 bzw. 23') angeordnet ist, die im wesentlichen bündig mit den Rasthaken (17,18 bzw. 17',18') ist und bis mindestens zu den Aushebeschrägen (20) an den Rasthaken (17,18 bzw. 17',18') reicht.

6. Elektrohandwerkzeug nach Anspruch 5, dadurch gekennzeichnet, daß zwischen jeweils zwei Rasthaken (17,18 bzw. 17',18') sich eine zu der Außenfläche der Rasthaken (17,18 bzw. 17',18') zurückversetzte Wandschräge (22 bzw. 22') erstreckt, die einen Anschlag für eine Einfederbewegung der Entriegelungszunge (23 bzw. 23') bildet.

7. Elektrohandwerkzeug nach Anspruch 5 oder 6, dadurch gekennzeichnet, daß Rasthaken (17,18,17',18') mit Rastnasen (19) und Aushebeschrägen (20), sowie Entriegelungszungen (23,23') und Begrenzungswandschrägen (22,22') einstückig an das Batteriegehäuse (10) angeformt sind.

8. Elektrohandwerkzeug nach einem der Ansprüche 1 - 7, dadurch gekennzeichnet, daß das Batteriegehäuse (10) zweigeteilt ist und einen unteren, kastenförmigen Gehäuseteil (13) und einen oberen, plattenartigen Gehäuseteil (14) aufweist und daß der obere Gehäuseteil (14) auf den unteren Gehäuseteil (13) aufgesetzt ist und beide Gehäuseteile (13,14) miteinander verbunden, z.B. verschweißt, verklebt, oder vergossen sind.

9. Elektrohandwerkzeug nach Anspruch 8, dadurch gekennzeichnet, daß die Rasthaken (17,18,17',18') und die Wandschrägen (22,22') am oberen Gehäuseteil (14) so angeformt sind, daß die Rasthaken (17,18,17'18') in von den Rastnasen (19) abgekehrter Richtung nach unten zum unteren Gehäuseteil (13) hin vorstehen und die Wandschrägen (22,22') sich jeweils zwischen den zugeordneten beiden Rasthaken (17,18 bzw. 17',18') bis hin zu deren freien Ende erstrecken, und daß die Entriegelungszungen (23,23') von Seitenwandabschnitten des unteren Gehäuseteils (13) dadurch gebildet sind, daß jeweils beidseitig der Entriegelungszungen (23,23') Wandausschnitte (24,25 bzw. 24',25') zur Aufnahme der Rasthaken (17,18 bzw. 17',18') eingebracht sind.

10. Elektrohandwerkzeug nach Anspruch 9, dadurch gekennzeichnet, daß die Wandschrägen (22,22') einstückig mit den zugeordneten Rasthaken (17,18 bzw. 17',18') sind.

11. Elektrohandwerkzeug nach einem der Ansprüche 1 - 10, dadurch gekennzeichnet, daß die Spange als Drahtbügel (26) ausgebildet ist.

## Claims

1. Battery-powered electric hand tool, such as a cordless drill, screwdriver or the like, having a machine housing (11), a battery housing (10) for accommodating batteries, which is attached to the machine housing (11), preferably to a handle integrally formed thereon in one piece, and having a catch connection which is effective between battery housing (10) and machine housing (11) and has catch hooks (17, 18, 17', 18') arranged on the battery housing (10) at opposite side walls and catch elements arranged on the machine housing (11) for the catch hooks to grip behind, the catch elements being formed by a U-shaped elastic clip (26) which rests in position in the machine housing (11) and the two U-legs (261, 262) of which are overlapped by the catch hooks (17, 18, 17', 18') in the locking position of the catch connection (12), characterized in that the catch hooks (17, 18, 17', 18') arranged on opposite side walls in each case have catch lugs (19) facing one another and projecting to the inside, and in that the U-legs (261, 262) of the clip (26) can be disengaged from the catch hooks (17, 18, 17', 18') by displacing the U-legs (261, 262) to the inside.

2. Electric hand tool according to Claim 1, in which the machine housing (11) is composed of two housing shells (111, 112) put together in the housing longitudinal direction, characterized in that the U-shaped, elastic clip (26) is held in the machine housing (11) in such a way that both housing shells (111, 112) are held together in a detachable manner by means of the clip (26).

3. Electric hand tool according to Claim 2, characterized in that in each case a U-leg (261, 262) of the clip (26) acts on an allocated housing shell (112 or 111) and presses the latter against the other housing shell (111 or 112), while the web (263) of the clip (26) connecting both U-legs (261, 262) extends over both housing shells (111 and 112).

4. Electric hand tool according to one of Claims 1 to 3, in which the machine housing consists of two housing shells put together in the housing longitudinal direction, characterized in that the clip (26) is inserted into the machine housing (11) from outside transversely to the longitudinal axis of the latter in such a way that the two U-legs (261, 262) of the clip (26) run in two channels (27, 28) facing one another with their openings and in each case projecting from one of the housing shells (111, 112), and the web (263) of the clip (26) connecting the two U-legs (261, 262) rests in an outer groove (29) extending transversely thereto over the two housing shells (111, 112), and in that the two channels (27, 28) are recessed in the region of the catch hooks (17, 18, 17', 18') in such a way that a leg section (261a, 262a) of each U-leg (261, 262) is exposed and the catch hooks (17, 18, 17', 18') are able to pass through between the exposed leg sections (261a, 262a) and the inner wall of the housing shells (111, 112).

5. Electric hand tool according to one of Claims 1 to 4, characterized in that two catch hooks (17, 18 and 17', 18' resp.) arranged at a distance from one another are provided on each of the two opposite sides of the battery housing (10), which catch hooks (17, 18 and 17', 18' resp.) project beyond the battery housing (10) in the direction in which the battery housing (10) is attached to the machine housing (11) and have catch lugs (19) here with lifting bevels (20) for overlapping the exposed leg sections (261a, 262a) of the clip (26), and in that an unlocking tongue (23 or 23') is arranged between each two catch hooks (17, 18 or 17', 18'), which unlocking tongue (23 or 23') is essentially flush with the catch hooks (17, 18 or 17, 18') and extends at least up to the lifting bevels (20) on the catch hooks (17, 18 and 17', 18' resp.).

6. Electric hand tool according to Claim 5, characterized in that a wall bevel (22 or 22') set back from the outer surface of the catch hooks (17, 18 or 17', 18') extends between each two catch hooks (17, 18 or 17', 18'), which wall bevel (22 or 22') forms a stop for an inward spring deflection movement of the unlocking tongue (23 or 23').

7. Electric hand tool according to Claim 5 or 6, characterized in that catch hooks (17, 18, 17', 18') having catch lugs (19) and lifting bevels (20) as well as unlocking tongues (23, 23') and boundary wall bevels (22, 22') are integrally formed on the battery housing (10) in one piece.

8. Electric hand tool according to one of Claims 1 to 7, characterized in that the battery housing (10) is split and has a bottom, box-shaped housing part (13) and a top, plate-like housing part (14), and in that the top housing part (14) is put onto the bottom housing part (13) and both housing parts (13, 14) are connected to one another, for example by welding, adhesive bonding or sealing.

9. Electric hand tool according to Claim 8, characterized in that the catch hooks (17, 18, 17', 18') and the wall bevels (22, 22') are integrally formed on the top housing part (14) in such a way that the catch hooks (17, 18, 17', 18') project downwards towards the bottom housing part (13) in a direction away from the catch lugs (19), and the wall bevels (22, 22') extend in each case between the two allocated catch hooks (17, 18 and 17', 18' resp.) right up to their free end, and in that the unlocking tongues (23, 23') are formed by side-wall sections of the bottom housing part (13) by wall cutouts (24, 25 and 24', 25' resp.) for accommodating the catch hooks (17, 18 and 17', 18' resp.) being made in each case on either side of the unlocking tongues (23, 23').

10. Electric hand tool according to Claim 9, characterized in that the wall bevels (22, 22') are in one piece with the allocated catch hooks (17, 18 and 17', 18' resp.).

11. Electric hand tool according to one of Claims 1 to 10, characterized in that the clip is designed as a wire bow (26).

## Revendications

1. Outil électrique à main, alimenté par une batterie d'accumulateur, tel qu'un tournevis à accumulateur, une perceuse à accumulateur ou un outil analogue, avec un boîtier de la batterie (10), monté sur le boîtier de l'appareil (11), de préférence sur une poignée formée dessus d'une seule pièce, boîtier de l'appareil (11) qui sert à recevoir des batteries et avec une liaison par encliquetage opérationnelle entre le boîtier de la batterie (10) et le boîtier de l'appareil (11), qui présente sur le boîtier de la batterie (10) des crochets d'encliquetage (17, 18 ou 17', 18'), disposés sur des parois latérales opposées et des éléments d'encliquetage disposés sur le boîtier de l'appareil (11) servant à venir en prise par derrière au moyen des crochets d'encliquetage (17, 18 ou 17', 18'), les crochets d'encliquetage (17, 18 ou 17', 18'), disposés sur des parois latérales opposées présentant respectivement des nez d'encliquetage (19) tournés les uns vers les autres, faisant saillie vers l'intérieur et les branches (261, 262) de l'agrafe (26) en forme d'U peuvent être désengagées des nez d'encliquetage 19 en étant déportées vers l'intérieur,
caractérisé en ce que
les éléments d'encliquetage sont formés par une agrafe élastique (26) en forme d'U, emboîtée dans le boîtier de l'appareil 11, dont les deux branches de l'U (261, 262) sont agrippées par les crochets d'encliquetage (17, 18 ou 17', 18') quand la liaison par encliquetage (12) est en position de verrouillage.

2. Outil électrique à main selon la revendication 1, dans lequel le boîtier de l'appareil (11) se compose de deux coquilles de boîtier (111, 112) montées l'une sur l'autre dans le sens longitudinal du boîtier,
caractérisé en ce que
l'agrafe élastique (26) en forme d'U, est maintenue dans le boîtier de l'appareil (11) d'une façon telle que les deux coquilles du boîtier (111, 112) sont maintenues ensemble de façon amovible au moyen de l'agrafe (26).

3. Outil électrique à main selon la revendication 2,
caractérisé en ce que
respectivement une branche (261, 262) de l'agrafe (26) en forme d'U vient en prise sur une coquille du boîtier correspondante (112 ou 111) et presse celle-ci contre l'autre coquille du boîtier (111 ou 112), tandis que l'entretoise, qui relie les deux branches de l'U (261, 262) de l'agrafe (26) s'étend sur les deux coquilles de boîtier (111 et 112).

4. Outil électrique à main selon la revendication 1 à 3, dans lequel le boîtier de l'appareil (11) se compose de deux coquilles de boîtier montées l'une sur l'autre dans le sens longitudinal du boîtier,
caractérisé en ce que
l'agrafe (26) est enfoncée perpendiculairement à l'axe longitudinal du boîtier de l'appareil (11) dans celui-ci de l'extérieur de telle sorte que les deux branches (261, 262) de l'agrafe en forme d'U (26) s'étendent dans deux gouttières (27, 28) se faisant vis à vis par leurs ouvertures, faisant saillie respectivement à partir de l'une des coquilles du boîtier (111, 112) et que l'entretoise (263) de l'agrafe (26), qui relie les deux branches de l'U (261, 262) s'emboîte dans une rainure extérieure (29) s'étendant sur les deux coquilles du boîtier (111, 112) et que les deux gouttières (27, 28) soient évidées dans la zone des crochets d'encliquetage (17, 18 ou 17', 18') d'une manière telle que soit libérée une section (261a, 262a) de chaque branche de l'U (261, 262) et que les crochets d'encliquetage (17, 18 ou 17', 18') aient la possibilité de passer entre les sections de branches libérées (261a, 262a) et la paroi intérieure des coquilles du boîtier (111, 112).

5. Outil électrique à main selon la revendication 1 à 4,
caractérisé en ce que
sur chacun des deux côtés se faisant vis à vis du boîtier de la batterie (10) on prévoit deux crochets d'encliquetage (17, 18 ou 17', 18') disposés à une certaine distance l'un de l'autre, qui font saillie sur le boîtier de la batterie (10), dans le sens du montage du boîtier de la batterie (10) sur le boîtier de l'appareil (11) et portent à cet endroit des nez d'encliquetage (19) avec des chanfreins d'enlèvement (20) pour venir en prise sur les sections libérées des branches ( 261a, 262a) de l'agrafe (26), et en ce qu'entre respectivement deux crochets d'encliquetage (17, 18 ou 17', 18') on dispose une languette de déverrouillage (23 ou 23'), qui est sensiblement à fleur avec les crochets d'encliquetage (17, 18 ou 17', 18') et arrive jusqu'aux chanfreins d'enlèvement (20) sur les crochets d'encliquetage (17, 18 ou 17', 18') au moins.

6. Outil électrique à main selon la revendication 5,
caractérisé en ce qu'
entre respectivement deux crochets d'encliquetage (17, 18 ou 17', 18') s'étend une paroi oblique (22 ou 22') déportée en arrière vers la face extérieure des crochets d'encliquetage (17, 18 ou 17', 18'), paroi oblique qui forme une butée pour un mouvement de compression élastique des languettes de déverrouillage (23 ou 23').

7. Outil électrique à main selon la revendication 5 ou 6,
caractérisé en ce que
les crochets d'encliquetage (17, 18 ou 17', 18') sont formés d'une seule pièce avec les nez d'encliquetage (19) et les chanfreins d'enlèvement (20), de même qu'avec les languettes de déverrouillage (23, 23') et les parois obliques de délimitation (22, 22') sur le boîtier de la batterie (10).

8. Outil électrique à main selon la revendication 1 à 7,
caractérisé en ce que
le boîtier de la batterie (10) est en deux parties et présente une partie inférieure de boîtier (13) en forme de boîte et une partie supérieure de boîtier (14) en forme de plaque et
en ce que
la partie supérieure de boîtier (14) est montée sur la partie inférieure de boîtier (13) et les deux parties de boîtier (13, 14) sont reliées ensemble, par exemple par soudage, par collage ou par scellement.

9. Outil électrique à main selon la revendication 8,
caractérisé en ce que
les crochets d'encliquetage (17, 18 ou 17', 18') et les parois obliques (22, 22') sont formés sur la partie supérieure de boîtier (14) de telle sorte que les crochets d'encliquetage (17, 18 ou 17', 18') viennent en saillie dans le sens opposé aux nez d'encliquetage (19), allant vers le bas, en direction de la partie inférieure de boîtier (13) et les parois obliques (22, 22') s'étendent respectivement entre les deux nez d'encliquetage (19) correspondants jusqu'à leurs extrémités libres et
en ce que
les languettes de déverrouillage (23, 23') sont formées à partir des sections de parois latérales de la partie inférieure de boîtier (13) grâce au fait que respectivement des deux côtés des languettes de déverrouillage (23, 23') on dispose des sections de paroi (24, 25 ou 24', 25') servant à recevoir les crochets d'encliquetage (17, 18 ou 17', 18').

10. Outil électrique à main selon la revendication 9
caractérisé en ce que
les parois obliques (22, 22') sont formées d'une seule pièce avec les crochets d'encliquetage (17, 18 ou 17', 18') correspondants.

11. Outil électrique à main selon la revendication 1 à 10
caractérisé en ce que
l'agrafe est constituée sous la forme d'un étrier (26) en fil d'acier.
